Europäisches Patentamt

European Patent Office

Office européen des brevets

(11) Publication number: **0 427 389 A1**

# EUROPEAN PATENT APPLICATION

(21) Application number: 90310565.8

(51) Int. Cl.$^5$: **C23C 2/02**, B22D 19/00

(22) Date of filing: 27.09.90

(30) Priority: 06.11.89 US 432046

(43) Date of publication of application:
15.05.91 Bulletin 91/20

(84) Designated Contracting States:
DE ES FR GB IT SE

(71) Applicant: **DANA CORPORATION (a Virginia corporation)**
4500 Dorr Street
Toledo, OH 43615(US)

(72) Inventor: **Guenther, William D.**
R.R. 2 Box 3B
Hagertown, Indiana 47346(US)

(74) Representative: **Cheyne, John Robert Alexander Mackenzie et al**
**HASELTINE LAKE & CO. Hazlitt House 28,**
**Southampton Buildings Chancery Lane**
**London WC2A 1AT(GB)**

(54) Method of treating a ferrous component for subsequent metallurgical bonding to cast aluminum.

(57) The present invention concerns a method of treating a ferrous component, such as a cast iron cylinder liner, for subsequent metallurgical bonding to cast aluminum, such as an engine block. Initially, the cast iron cylinder liner is cleaned of grease, oil, and oxides, and is then immersed in a bath of molten aluminum at a temperature in the range of 1100-1500° F, for a time period sufficient to form an Fe-Al intermetallic compound layer adjacent the surface thereof. As the cylinder liner is removed from the aluminum bath, a thin molten aluminum coating will cover the liner, and an aluminum oxide film immediately begins to form thereon. In accordance with the present invention, immediately after the liner is removed from the aluminum bath, and while the aluminum coating on the liner remains molten, the liner is quenched in a zinc alloy bath at a temperature in the range of 720-1000° F. When the liner is immersed in the zinc alloy bath, the aluminum oxide film on the surface of the molten aluminum coating will wash away and float to the surface, thereby leaving a protective zinc coating on the liner which prevents the formation of any further oxides. The zinc coating will remain on the liner until the aluminum casting operation, at which, time the zinc will wash away and alloy with the cast aluminum, thereby ensuring a metallurgical bond between the liner and the casting.

EP 0 427 389 A1

ZINC ALLOY 16
ALUMINUM 14
FE-AL LAYER 12
FERROUS COMPONENT 10

**FIG. 1**

## METHOD OF TREATING A FERROUS COMPONENT FOR SUBSEQUENT METALLURGICAL BONDING TO CAST ALUMINUM

### BACKGROUND OF THE INVENTION

The present invention relates generally to a method of casting aluminum to a ferrous component and, in particular, to a method of treating a cast iron component for subsequent metallurgical bonding to cast aluminum.

It is well known that, prior to casting a light metal such as aluminum to a ferrous component such as cast iron, it is necessary to form what is known as "$Fe_x$-$Al_y$ intermetallic compound" layer (hereinafter Fe-Al layer) adjacent the surface of the ferrous component in order to achieve a metallurgical bond between the ferrous component and the aluminum casting. This Fe-Al intermetallic compound layer is typically formed by first removing any surface contaminants such as oxides from the ferrous component, and then immersing the component in a bath of molten aluminum at a temperature in the range of 1300-1500° F. While the ferrous component is in the aluminum bath, a chemical reaction takes place and forms the Fe-Al layer (approximately 40% Fe and 60% Al) at the interface of the molten aluminum and the ferrous component. After a predetermined time sufficient to form the Fe - Al intermetallic compound layer, the ferrous component is removed from the aluminum bath, placed in a mold, and aluminum is poured over the ferrous component as quickly as possible.

When the ferrous component is removed from the aluminum bath, the molten aluminum coating thereon is exposed to the atmosphere, an aluminum oxide film immediately begins to form on the outer surface of the coating. The molten aluminum coating will quickly solidify with an oxide film thereon. Therefore the time between when the ferrous part is removed from the molten aluminum bath and molten aluminum is cast over the ferrous part must be kept to a minimum.

The above described method is known as the "Al-Fin" process. According to the Al-Fin process, immediately after the ferrous component is removed from the molten aluminum bath which forms the Fe-Al intermetallic compound layer, the ferrous component is placed in the casting mold and molten aluminum is introduced therein to form the casting. As the molten cast aluminum contacts the ferrous component, the oxide film, which is floating on the molten aluminum coating of the ferrous component, will wash away, thereby permitting a metallurgical bond to form between the component and the casting.

While the above described Al-Fin process can be effectively used in many casting operations, there are also many casting operations which cannot effectively use this process. This is because, in order to use the Al-Fin process, it is necessary that the ferrous component be removed from the aluminum bath, positioned in the casting mold, and have molten cast aluminum introduced therein before the molten aluminum coating having the oxide film thereon solidifies. Once this coating begins to solidify, the molten cast aluminum will not wash away the oxide film and a metallurgical bond cannot be obtained. From a practical standpoint, only ferrous components which have relatively thick walled sections to prevent rapid cooling, and will retain the aluminum coating thereon in a molten state for at least 10 to 17 seconds after removal from the aluminum bath, can be used with the Al-Fin process.

For relatively thin walled ferrous components, it has been necessary to resort to an oxide cleaning operation prior to casting or molding. In these situations, before the ferrous component is cast in aluminum, the oxide coating must be removed therefrom. As the oxide coating is removed, the part is coated or "tinned" with a zinc alloy which prevents further oxidation. Thereafter, when aluminum is cast around the preheated part, the molten cast aluminum will wash away the zinc, and a metallurgical bond is formed between the ferrous component and the cast aluminum.

Heretofore, the aluminum oxide coating has been removed by either wire brushing or chemical fluxing while heating the components and simultaneously tinning with zinc, or by ultrasonically cleaning the component in a zinc alloy bath. However, all of these methods are very labor intensive, and not necessarily effective in completely removing all the aluminum oxide. While the outside surface of the zinc applied in the treatment contains a thin oxide film, the oxide film is quickly removed during the casting process by the washing actions created by the high temperature molten aluminum.

### SUMMARY OF THE INVENTION

The present invention concerns a unique process of treating a ferrous component of any section size, prior to subsequent metallurgical bonding to cast aluminum, which eliminates the step of separately cleaning the aluminum oxide from the surface of a ferrous component having an Fe-Al intermetallic compound layer formed thereon. In accordance with the present invention, when the ferrous component is removed from the aluminum bath which forms the Fe-Al intermetallic compound layer, the ferrous component is immediately immersed and "quenched" in a zinc alloy bath at a lower temperature than the aluminum bath. Since the thin aluminum coating which has formed on the component is still molten when the component is inserted into the zinc alloy bath, the aluminum oxide film which has formed on the surface thereof will be washed away, and a protective zinc coating will be formed thereon. The oxide protection given by the zinc coating allows the treated ferrous part to be cooled to ambient conditions prior to molding or casting if needed.

In the preferred embodiment, the method is used to treat a cast iron cylinder liner for subsequent metallurgical bonding to a cast aluminum engine block. Initially, the cast iron cylinder liner is cleaned of grease, oil, and oxides, and is then rapidly immersed (to prevent iron oxidation) in a bath of molten aluminum at a temperature in the range of 1300-1450°F, for a time period sufficient to form an Fe-Al intermetallic compound layer adjacent the surface thereof. As the cylinder liner is removed from the aluminum bath, a thin molten aluminum coating will cover the liner, and an aluminum oxide film immediately begins to form thereon. In accordance with the present invention, immediately after the liner is removed from the aluminum bath, and while the aluminum coating on the liner remains molten, the liner is quenched in a zinc alloy bath at a temperature in the range of 720-1000°F. When the liner is immersed in the zinc alloy bath, the aluminum oxide film on the surface of the molten aluminum coating will wash away and float to the surface, thereby leaving a protective zinc coating on the liner which prevents the formation of any further aluminum oxides. The zinc coating will remain on the liner until the aluminum casting operation, at which time the zinc will wash away and alloy with the cast aluminum, thereby ensuring a metallurgical bond between the liner and the casting.

The method of the present has proved to be highly effective in those instances wherein the well known Al-Fin process cannot be used. Moreover, even if the Al-Fin process can be used, the present method is advantageous when it is not practical or convenient to immediately cast the aluminum after removing the iron part from the aluminum bath.

## BRIEF DESCRIPTION OF THE DRAWINGS

FIG. 1 is a fragmentary sectional view through a ferrous component, such as a cylinder, treated in accordance with the method of the present invention; and

FIG. 2 is a sectional view of a combustion bowl insert which can be treated according to the method of the present invention.

## DESCRIPTION OF THE PREFERRED EMBODIMENT

The method of the present invention has been effective in treating cast iron cylinder liners which are to be subsequently bonded to a cast aluminum engine block. More specifically, in one example, a cylinder liner having an outside diameter of approximately $3\frac{1}{2}$ inches, a length of approximately $5\frac{1}{2}$ inches, and a wall thickness of approximately 1/8 of an inch is machined from centrifugally or static cast grey iron. Thereafter, the cylinder liner is cleaned in a conventional known manner to remove any surface contaminants such as silica inclusions, dirt, grease, and oil, and also to remove any oxides from the surface. Next, the cylinder liner is rapidly immersed in a bath of molten aluminum at a temperature in the range of 1100 - 1500°F, and preferably in the range of 1350 -1400°F. The aluminum can be SAE 319 or other castable aluminum alloys. The cylinder liner is then left in the aluminum bath for a sufficient time to bring the cylinder liner up to the temperature of the bath, at which time a chemical reaction takes place to form the Fe-Al intermetallic compound layer, which is generally no more than about .0005" thick. The specific length of time that the ferrous component is left in the aluminum bath will vary depending on the overall size and thickness of the component and the volume of the aluminum bath since, before the Fe-Al intermetallic layer can be formed, the component must be brought to the required temperature range. With a cylinder liner having the dimensions as set forth above, and an 800 pound bath of aluminum, a time of approximately $1\frac{1}{2}$ to 2 minutes has proved satisfactory.

The cylinder liner, having a thin molten aluminum coating thereon, is then removed from the aluminum bath. Instantly, an aluminum oxide film begins to form as the outside air contacts the outside surface of the molten aluminum coating. In accordance with the present invention, the cylinder liner, while still hot from the aluminum bath such that the aluminum coating remains molten, is immersed and quenched in a molten zinc alloy bath at a temperature in the range of 720 - 1000°F, and preferably at approximately 800°F. As long as the liner is sufficiently hot, the aluminum coating below the oxide film will remain molten, and the oxide film will thus "float" on the aluminum coating. When the liner is immersed into the zinc alloy bath, due to the greater specific gravity of the molten zinc, the oxide film will be washed away from the component and will float to the surface of the zinc bath, where it can be skimmed off. When the component is removed from the zinc bath, a protective coating of zinc will be formed around the sleeve. Thus, with the present invention, the need for removing the aluminum oxide is eliminated.

While it is possible to utilize a pure zinc bath to strip the aluminum oxide layer, the present invention preferably uses a zinc alloy, as noted above, since the added alloy typically lowers the melting temperature of the bath. The zinc alloy bath can consist of approximately 60-100% zinc by weight and 0-40% aluminum by weight. Preferably, the zinc alloy consists of 95% zinc and 5% aluminum. It should be noted that other metals, such as cadmium or lead, for example, could be alloyed with zinc, either alone or in combination with aluminum.

In the event the cylinder liner is to be soon cast into an engine block, the liner can remain in the zinc bath, which will maintain the temperature of the liner at an elevated level suitable for the casting operation. Otherwise, the liner can be removed from the zinc bath and stored until ready for use. At that time, the liner can be preheated to a temperature in the range of 500 - 800° F by means of either induction heat or a furnace. The preheated liner can then be positioned within the casting mold, and molten aluminum can be introduced into the mold to form the engine block. As the molten aluminum contacts the zinc-coated liner, the zinc coating is alloyed and washed away, thereby ensuring a good bond between molten aluminum casting and the aluminum coating which was underneath the zinc coating. Examples of cast aluminum alloys which can be used to form the engine block include SAE 319, 356, or 390.

While the above method has been described for use in connection with preparing cast iron cylinder liners for subsequent casting into an aluminum engine block, it will be appreciated that the method can be used whenever it is desired to obtain a metallurgical bond when casting aluminum around a ferrous component. For example, piston ring inserts and combustion bowl inserts constructed of low chromium austenitic gray iron known as Ni-Resist, can be treated for subsequent casting to aluminum. It should also be noted that it is not necessary that the ferrous component be cast iron since, in some instances, it may be desirable to use steel or powdered metal.

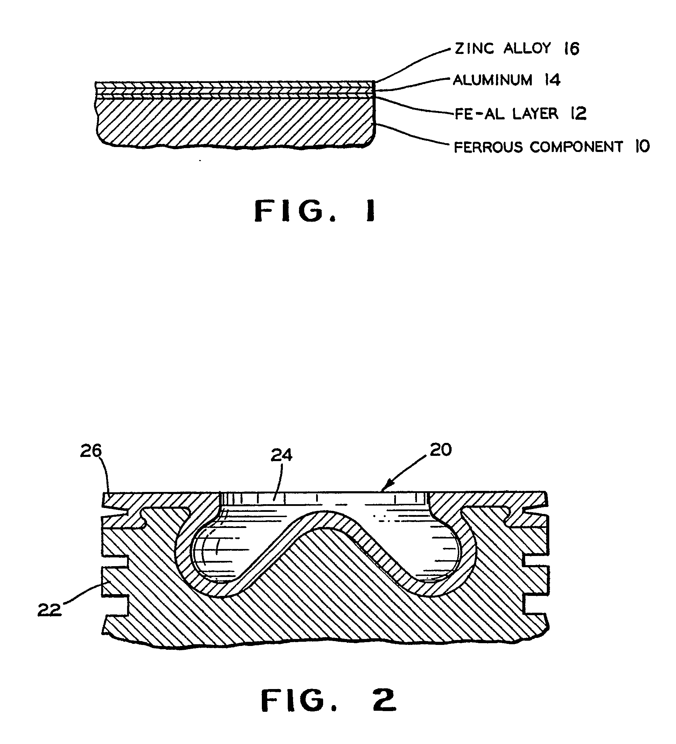

FIG. 1 represents a cross-sectional view through a ferrous component 10 which has been treated in accordance with the method of the present invention. In FIG 1, the ferrous component 10, after it has been placed in the hot aluminum bath has an Fe-Al layer 12 formed adjacent the outside surface of the component 10. An aluminum coating 14 of relatively uniform thickness covers the Fe-AL layer 12. A zinc alloy coating 16 of relativity uniform thickness covers the aluminum coating. When treated according to the described method, both the aluminum and zinc coatings will have relatively uniform thicknesses about the entire peripherial surface of the ferrous component. In the prior art "tinning" process, the aluminum and zinc alloy layers were not of uniform thickness.

It should be noted that the thicknesses of the layer 12 and the coatings 14 and 16 are exaggerated in FIG. 1, and not necessarily in the correct proportions to one another. Typically, the layer 12 will be approximately .0005 inches, the aluminum coating 14 will be .001-.004 inches, while the zinc alloy coating 16 will be .001-.003 inches.

An example of one type of ferrous components which can be treated with the present invention is a combustion bowl insert, generally represented in FIG. 2 by reference numeral 20. The insert 20, which can be constructed of a ferrous component such as Ni-Resist and treated in a manner as herein described, can be cast into an aluminum piston, shown in FIG. 2 at 22. The insert 20 is provided with a high strength cavity 24 for receiving expanding combustion gases during the power stroke of the associated engine. In some instances, depending on the diameter of the associated piston, it may be desirable to form a combustion bowl insert and a piston ring insert (shown at 26) as a single component to be cast in the piston, as shown in FIG. 2.

The method of the present invention has been described in its preferred embodiment. However, as noted above, variations to the preferred method are possible without departing from the spirit or scope of the attached claims.

**Claims**

1. A method of treating a ferrous member for subsequent metallurgical bonding to an aluminum casting member comprising the steps of:

(a) immersing the ferrous member in a bath of molten aluminum at a first predetermined temperature and for a sufficient time to form an Fe - Al intermetallic compound layer adjacent the surface thereof;

(b) removing the ferrous member from the molten aluminum bath such that an aluminum oxide film is formed on the surface of a molten aluminum coating covering the ferrous member;

(c) maintaining the aluminum coating on the ferrous member in a molten state; and

(d) immediately subsequent to step (c), immersing the ferrous member in a bath of molten zinc alloy at a second predetermined temperature less than the first predetermined temperature to quench the ferrous member, strip the aluminum oxide film from the molten aluminum coating, and form a protective zinc alloy coating thereon.

2. The method according to claim 1 wherein said ferrous member is cast iron.

3. The method according to claim 1 wherein said ferrous member is steel.

4. The method according to claim 1 wherein said ferrous member is powdered metal.

5. The method according to claim 1 wherein said first predetermined temperature is in the range of 1100 -1500° F.

6. The method according to claim 1 wherein said first predetermined temperature is in the range of 1350 -1400° F.

7. The method according to claim 1 wherein said zinc alloy includes aluminum in the range of 0 - 40% by weight.

8. The method according to claim 1 wherein said zinc alloy includes approximately 95% zinc by weight and approximately 5% aluminum by weight.

9. The method according to claim 8 wherein said second predetermined temperature is in the range of 720 -1000° F.

10. The method according to claim 1 and further including the steps of:

(e) placing the ferrous member having the protective zinc coating thereon in an aluminum casting mold; and

(f) introducing molten aluminum into the casting mold.

ZINC ALLOY 16

ALUMINUM 14

FE-AL LAYER 12

FERROUS COMPONENT 10

# FIG. 1

# FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 6, no. 113 (M-138)[991], 24th June 1982; & JP-A-57 041 875 (TOYO KOGYO) 09-03-1982 * Abstract * | 1 | C 23 C 2/02 B 22 D 19/00 |
| A | IDEM | 4 | |
| Y | PATENT ABSTRACTS OF JAPAN, vol. 7, no. 53 (C-154)[1198], 3rd March 1983; & JP-A-57 200 548 (MITSUBISHI JUKOGYO) 08-12-1982 * Abstract * | 1 | |
| A | GB-A-6 345 99 (THE BIRMINGHAM ALUMINIUM CASTING) * Claims 1-6; page 2, lines 86-91; page 3, lines 29-44 * | 1-10 | |
| A | FR-A-1 174 211 (M.G. WHITFIELD) * Claims; page 2, right-hand column, last paragraph; page 3, left-hand column, lines 1-21 * | 1,10 | |
| A | EP-A-0 037 143 (C.R.M.) * Claims 1,10,11 * | 1 | TECHNICAL FIELDS SEARCHED (Int. Cl.5) |
| A | US-A-2 775 493 (W.C. CHENEY) * Claims 1,2; column 4, lines 20-22 * | 2-4 | C 23 C B 22 D |

The present search report has been drawn up for all claims

| Place of search | Date of completion of search | Examiner |
|---|---|---|
| The Hague | 08 February 91 | ELSEN D.B.A. |